# EUROPEAN PATENT APPLICATION

(11) **EP 1 100 238 A2**
(43) Date of publication of application: **16.05.2001**
(21) Application number: 00118469.6
(22) Date of filing: 25.08.2000
(51) Int. Cl.: H04L 29/06, H04L 12/64, H04M 7/00

(54) **Communication system with local area network combined with telephone network**

(30) Priority: 02.11.1999 KR 9948200
(71) Applicant: Chun, Jae Wook, Yangchun-Ku, Seoul (KR)
(72) Inventor: Chun, Jae Wook, Yangchun-Ku, Seoul (KR)
(74) Representative: Stenger, Watzke & Ring Patentanwälte

(57) **Abstract**

A communication system with a local area network (LAN) combined with a telephone network which can be installed at a low cost and can provide communications with an inexpensive charge by enabling telephone calls through Internet as well as through internal and external telephone lines without installing a searate telephone network or data communication network. The communication system includes a data communication network matching device for separating audio data from packet data inputted through the data communication network by decomposing and analyzing the packet data, and a telephone subscriber matching device for digital-converting and compressing an audio signal inputted from the telephone network, converting compressed audio data into packet data with reference to Internet protocol (IP) addresses corresponding to telephone numbers of the respective telephone sets, and transferring the data packet to the data communication network matching device. The telephone subscriber matching device also restores and analog-converts the audio data inputted from the data communication network matching device, and transfers converted audio signal to the telephone network. The IP addresses corresponding to the telephone numbers are provided by dialing a specified button of the telephone set to discriminate an internal telephone call, external telephone call, and telephone call using Internet.

## Description

### BACKGROUND OF THE INVENTION

### 1. Field of the Invention

The present invention relates to a communication system with a local area network combined with a telephone network. In particular, the present invention relates to communication system with a local area network combined with a telephone network which can be installed at a low cost and provide communications with an inexpensive charge by enabling an effective use of the local area network and telephone communications using the local area network.

### 2. Description of the Related Art

Recently, to cope with the information era, the demand for the local area network (LAN) becomes more and more increased. In addition, diverse communication methods having composite functions such as an Internet phone have been proposed.

At present, the LAN is mainly used as a data communication network, and the telephone network is mainly used for analog type communications. Through the telephone network, only a facsimile transmission or a limited data communication using a modem for a personal computer (PC) can be effected. For example, in most companies, the LAN and the telephone network are separately installed, and the LAN cables and the telephone cables are also separately connected to respective persons. In this case, it is inconvenient to use an Internet phone through the LAN. According to the existing Internet phone, the communication is effected using a headphone and a microphone through a sound card or a simple audio converting device built in the PC, and this causes a user inconvenience. Meanwhile, an international call can be made at a low cost through an Internet phone service company, but this method provides a limited service.

In order to solve the above described problems in use, apparatuses for providing a LAN combined with a telephone network have been proposed.

Korean Unexamined Utility Model Publication No. 1999-0018001 discloses a communication interface apparatus with a communication terminal connection jack. According to this interface apparatus, only remaining lines of LAN cables are used as telephone cables, and thus the LAN cables and the telephone cables are independently exist. Accordingly, this interface apparatus can be applied only to the LAN using an RJ-45 connection jack and UTP cables, but cannot be applied to the LAN using coaxial cables and a BNC connection jack. Also, in wiring telephone sets, telephone lines on terminals of a hub, which is a communication network distributing device, should be connected to the respective LAN cables, and thus if the telephone wiring is changed, it is also required to re-wire the LAN cables.

Korean Unexamined Patent Publication No. 1996-36414 discloses a composite transmitting system which comprises a LAN combined with other communication channels. This composite transmitting system can superimpose other communication signals including a telephone signal through the LAN cable using a transformer. However, the communication apparatus combined with the LAN should employ a separate device such as a time division multiplexing (TDM) type or frequency division multiplexing (FDM) type dedicated exchange if it is not of a point-to-point communication type. For example, in case of superimposing various telephone signals on the LAN connected to the BNC connection jack, the telephone signals are mixed together and a cross talk is generated if a device for separating the telephone signals is not employed.

The above-described interface apparatus and the composite transmitting system cannot be used in different LANs where a communication network is connected to another communication network, but can be used in a single LAN only.

### SUMMARY OF THE INVENTION

It is an object of the present invention to solve the problems involved in the related art, and to provide a communication system with a local area network (LAN) combined with a telephone network which can be installed at a low cost and can provide communications with an inexpensive charge by enabling telephone calls through Internet as well as through internal and external telephone lines without installing a separate telephone network or data communication network.

In order to achieve the above object, there is provided a communication system where a data communication network connected to a plurality of personal computers (PC) is combined with a telephone network connected to a plurality of telephone sets, the communication system comprising a data communication network matching device for separating audio data from packet data inputted through the data communication network by decomposing and analyzing the packet data, and a telephone subscriber matching device for digital-converting and compressing an audio signal inputted from the telephone network, converting compressed audio data into packet data with reference to Internet protocol (IP) addresses corresponding to telephone numbers of the respective telephone sets, and transferring the data packet to the data communication network matching device, the telephone subscriber matching device also restoring and analog-converting the audio data inputted from the data communication network matching device, and transferring converted audio signal to the telephone network, wherein the IP addresses corresponding to the telephone numbers are provided by dialing a specified button of the telephone set to discriminate an internal telephone call, external telephone call, and telephone call using Internet.

According to the present invention, the data communication network may be a local area network (LAN), and the data communication network matching device may comprise a data communication network interface card. The specified buttons of the telephone set may be a # button or * button.

The data communication network matching device and the telephone subscriber matching device which constitute the communication system of the present invention may be installed on a main board of the PC, or may be mounded on the PC in the form of a single card or of two independent cards.

### BRIEF DESCRIPTION OF THE DRAWINGS

The above object, other features and advantages of the present invention will become more apparent by describing the preferred embodiments thereof with reference to the accompanying drawings, in which:
FIG. 1 is a block diagram of a conventional communication system with a data communication network combined with a telephone network.
FIG. 2 is a block diagram of a communication system with a data communication network combined with a telephone network according to the present invention.
FIG. 3 is a block diagram of the telephone subscriber matching device of FIG. 2 according to an embodiment of the present invention.
FIG. 4 is a block diagram of the telephone subscriber matching device of FIG. 2 according to another embodiment of the present invention.
FIG. 5 is a flowchart illustrating the call originating process performed by the communication system according to the present invention.
FIG. 6 is a flowchart illustrating the call terminating process performed by the communication system according to the present invention.
FIG. 7 is a flowchart illustrating the telephone call releasing process performed by the communication system according to the present invention.

### DETAILED DESCRIPTION OF THE PREFERRED EMBODIMENTS

Now, the construction and operation of the present invention will be explained in detail with reference to the accompanying drawings.

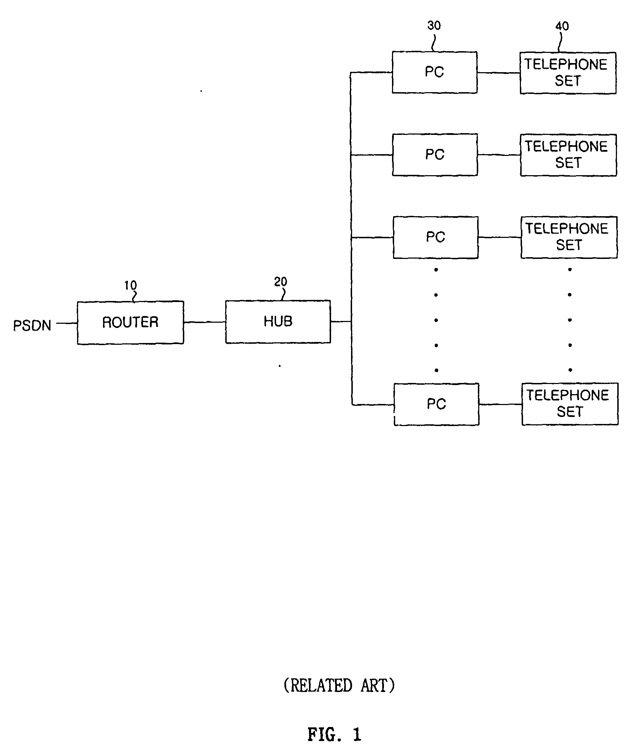

FIG. 1 is a block diagram of a conventional communication system with a data communication network combined with a telephone network.

Referring to FIG. 1, the conventional communication system comprises a router 10 connected to a packet switched data network (PSDN), a hub 20 which is a communication network distributing device, and a plurality of personal computer (PC) 30 connected to a plurality of telephone sets 40, respectively, and provided with communication lines through the hub 20. In order to construct the combined communication network, the respective PCS 30 are provided with a network interface card.

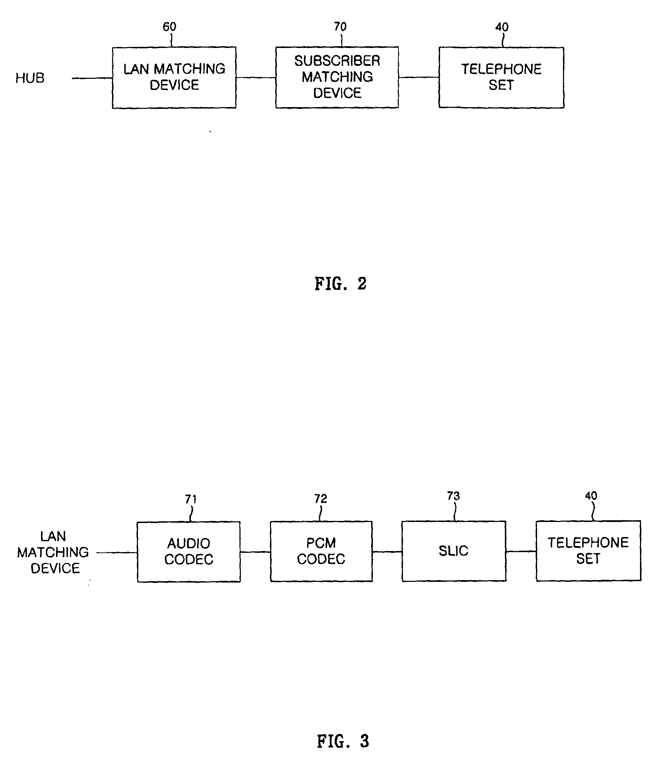

FIG. 2 is a block diagram illustrating the construction of the communication system according to the present invention. Referring to FIG. 2, the communication system according to the present invention comprises a local area network (LAN) matching device 60 connected to a data communication network, and a telephone subscriber matching device 70 connected to the LAN matching device 60. The LAN matching device 60 and the telephone subscriber matching device 70 which constitutes the communication system according to the present invention are installed on a personal computer (PC) 30 in FIG. 1. Specifically, they are installed on a main board of the PC 30, or may be mounded on the PC 30 in the form of a single card or of two independent cards.

The LAN matching device 60 follows the existing wire LAN standard of IEEE 802.3, 802.u, 802.3x, and 802.5, and the radio LAN standard of IEEE 802.11 or the asynchronous transfer mode (ATM).

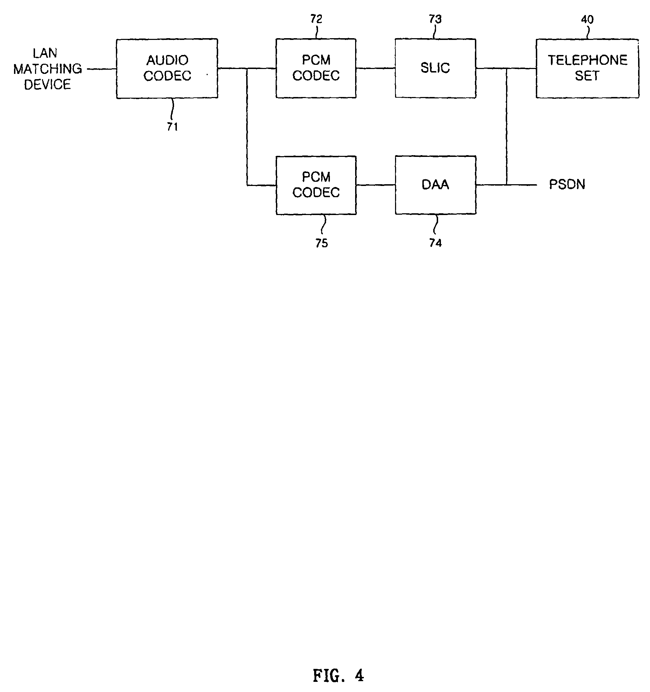

FIG. 3 is a block diagram of the telephone subscriber matching device 70 in FIG. 2 according to an embodiment of the present invention. Referring to FIG. 3, the telephone subscriber matching device 70 comprises an audio codec 71 for compressing/restoring the audio data, a pulse code modulation (PCM) codec 72 for converting the analog audio signal into a digital signal and vice versa, and a subscriber line interface circuit (SLIC) 73, connected to the respective telephone set, for performing a telephone subscriber matching function.

If the audio data is not compressed when it is transmitted as a packet, a packet transmission delay or packet loss due to the communication network is generated since the PCM data has a large amount of data of 64Kbps, and the tone quality deteriorates. Accordingly, the audio data is compressed to reduce the amount of data to be transmitted, so that the load of the communication network is reduced, and the tone quality is improved.

In case of using the existing LAN card or another communication matching card as the LAN matching device 60, a separate card having the telephone subscriber matching function according to the present invention should be provided. The LAN matching device 60 decomposes and analyzes the packet received through the data communication network. If the received packet is the telephone audio data, the LAN matching device 60 decomposes the packet, and transfers only the audio data to the telephone subscriber matching device 70.

The telephone subscriber matching device 70 decodes the data transferred from the LAN matching device 60 by a determined method through the audio codec 71, and transfers the decoded data to the PCM codec 72. The PCM codec 72 converts the decoded data into an analog audio signal. This analog audio signal is transferred to the telephone set 40 through the subscriber line interface circuit 73.

On the contrary, an analog audio signal outputted from the telephone set 40 is extracted through the subscriber line interface circuit 73, and transferred to the PCM codec 72. The audio signal transferred to the PCM codec 72 is converted into PCM data. The PCM data is compressed through the audio codec 71, made into a packet with reference to the determined receiving IP address, and then transferred to the LAN data communication matching device 60 to be transmitted to an opposite party through the data communication network.

FIG. 4 is a block diagram of the telephone subscriber matching device 70 in FIG. 2 according to another embodiment of the present invention. Referring to FIG. 4, another PCM codec 75 and a data access arrangement (DAA) 74 are additionally provided in order to connect the communication system according to the present invention to the existing telephone network. By this construction of the telephone subscriber matching device 70, the telephone sets 40 which are connected to the PCS 30 connected to the data communication network can share the telephone line connected to the communication system according to the present invention.

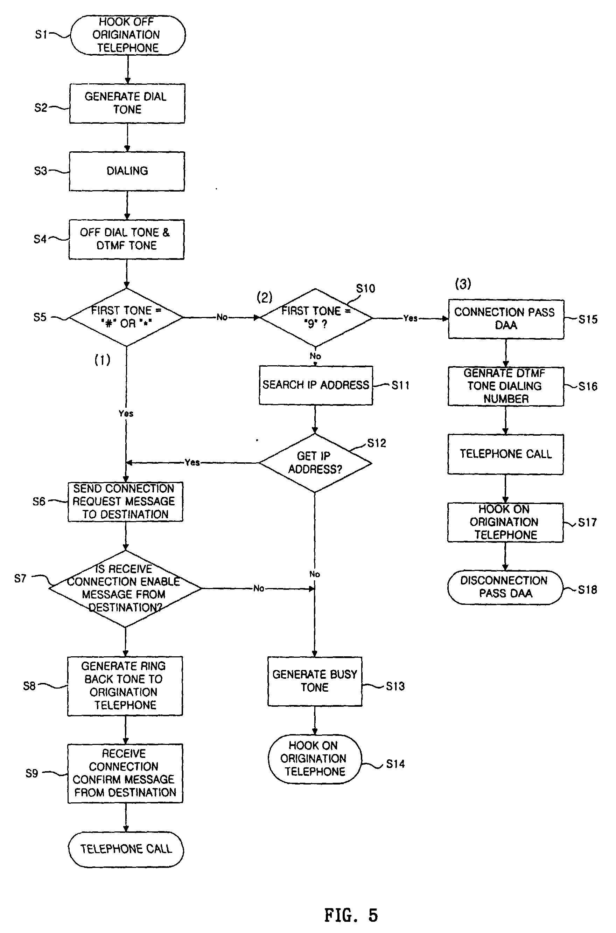

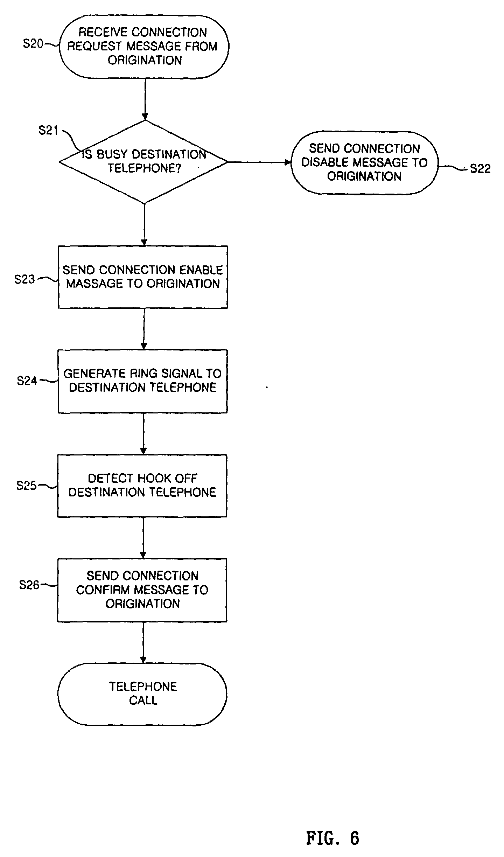

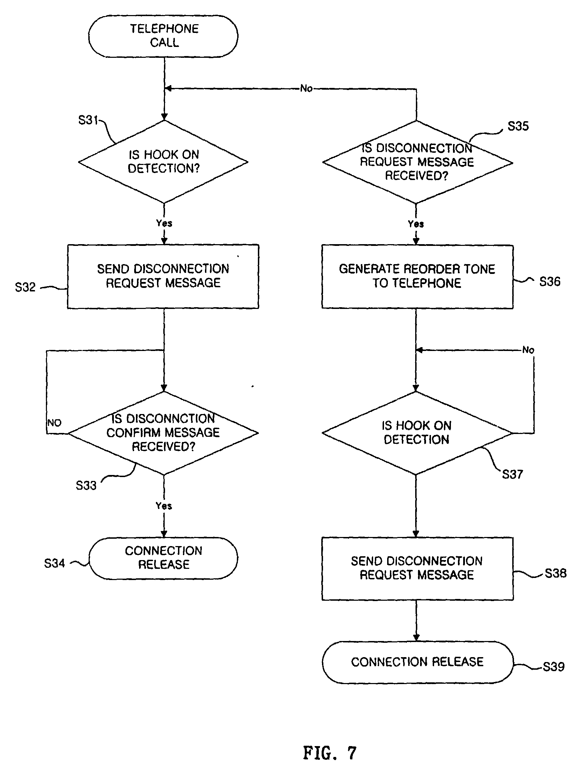

FIG. 5 is a flowchart illustrating the call originating process performed by the communication system according to the present invention, FIG. 6 is a flowchart illustrating the call terminating process performed by the communication system according to the present invention, and FIG. 7 is a flowchart illustrating the telephone call releasing process performed by the communication system according to the present invention. Referring to FIGs. 5, 6, and 7, the process of an internal line telephone call, telephone call using the Internet, and external line telephone call performed by the communication system according to the present invention will be explained in detail.

First, in case that the telephone call is made through the internal line or using the Internet, if a receiver of the telephone set 40 is in a hook-off state (step S1), the matching device according to the present invention sends a dial tone to a user of the telephone set 40 (step S2), and receives the telephone number of the destination by detecting digit tones pressed by the user (steps S3 and S4).

At this time, in case of the telephone call using the Internet, the IP address of the destination is inputted as the telephone number of the destination using the buttons of the telephone set 40. Specifically, in order to discriminate the telephone call using the Internet from the internal line telephone call, the Internet IP address is inputted using a # or * button of the telephone set 40. For instance, if the IP address is 123.102.85.9, buttons of *123*102*85*9 are pressed. This can be effected by dialing # or * among the buttons of the telephone in replacement of the button ., which is used as a discriminator of the IP address, or by pressing IP address discriminating numbers, for example, composed of three figures, and then telephone numbers, for example, composed of 12 figures, i.e., *123102085009.

If the initial input dial tone is # or * as described above, the matching device discriminates it as the Internet IP address (step S5), and searches a database (DB) of its own. If the IP address of the destination does not exists in the database, the matching device makes the corresponding number into a packet, and transmits the packet to a specified PC to request the search for the corresponding IP address. The specified PC which has received the packet searches a database of telephone numbers. If the corresponding number is found, the specified PC transmits the IP address of the corresponding telephone number to the PC which requested the search, while if the corresponding number is not found, the specified PC transmits a message informing that the corresponding number is not found.

When the IP address is found in its own database or in the database of the specified PC, the matching device sends a connection request message in the form of a packet to the terminating PC (step S6), and the terminating PC which has received the message (step S20) sends a connection enable message to the originating PC (step S23) if the telephone call is possible, and then provides a ring signal to the terminating telephone set (step S24).

The originating PC which has received the connection enable message from the terminating PC (step S7) provides a ring back tone to the originating telephone set (step S9). If the terminating telephone set becomes in the hook-off state by the user who has received the ring back tone (step S25), the terminating PC sends a connection confirm message to the originating PC (step S26), and then sends an audio data packet to the originating PC. The originating PC which has received the connection confirm message from the terminating PC also sends an audio data packets to the terminating PC, so that a mutual communication is performed.

In this state, if either the terminating telephone set or the originating telephone set is in a hook-on state after the completion of the communication (step S31), the PC which has detected the hook-on sends a connection release message to the opposite PC (step S32). The PC which has received the connection release message (step S35) provides a reorder tone to the user (step S36). If the user hooks on the telephone set (step S37), the PC sends the connection release message to the opposite PC (step S38) to terminate the telephone call (step S39).

If the terminating party has already made a telephone call with another person (step S21), the terminating PC sends a connection disable message to the originating PC (step S22). If the originating PC receives the connection disable message from the terminating PC as above, the matching device according to the present invention sends a busy tone to the user. At this time, if the originating party hooks on the telephone receiver, the call is terminated. If the user presses reservation buttons (for example, ##) using the specified tone buttons (for example, # or *), the originating PC sends the connection disable message to the terminating PC. The terminating PC, which has received the connection disable message, sends a reservation ready message to the originating PC, and the originating PC, which has received the reservation ready message, sends the ring back tone to the user, so that the user hooks on the telephone receiver.

If the terminating party completes the telephone call in the above-described reservation state, the terminating PC provides the ring signal to the terminating telephone set, and sends a reservation connection message to the originating PC. The PC, which has received the reservation connection message, provides a ring signal to the originating telephone set to enable the telephone call.

Meanwhile, in case of the external line telephone call, the dialing of the external line telephone call in a private branch exchange is generally effected by pressing the button of 9 and then pressing the external telephone number (step S10). In the PC using the matching device of FIG. 4, if the user hooks off the telephone receiver, the originating PC provides a dial tone to the user through the matching device. Then, if the user presses the button of 9, the telephone is directly connected to the external telephone line. In this case, the telephone call is identical to the general telephone call.

If the user turns off the power and thus the PC does not operate, the subscriber matching device of FIG. 4 connects the external telephone line directly to the telephone set, and thus only the telephone call can be made.

The subscriber matching device of FIG. 3 enables the external line telephone call using the PC on which the subscriber matching device of FIG. 4, that is permitted to be used in the same communication network or another communication network, is mounted. In this case, if the telephone set connected to the matching device of FIG. 3 is hooked off, the matching device of FIG. 3 provides the dial tone to the user. If the user presses the button of 9, the matching device of FIG. 3 searches the IP address of the PC, which can be connected to the external telephone, in its own database, i.e., the IP address of the PC in which the matching device of FIG. 4 is installed, and sends thereto an external connection request message and the external telephone number that the user pressed.

The matching device of FIG. 4, which has received the external connection request message, sends an external line busy message to the matching device of FIG. 3 if the external line is busy, and the matching device of FIG. 3 provides a busy tone to the user to inform the busy state to the user. If the telephone call becomes possible, the matching device of FIG. 4 hooks off the external line by controlling the data access arrangement (DAA) 74, and dials the external telephone number sent from the matching device of FIG. 3 to the external telephone line. If the dialing is completed, the matching device of FIG. 4 sends an external connection enable message to the matching device of FIG. 3. Thereafter, the audio data in the form of a packet is transmitted between the matching device of FIG. 3 and the matching device of FIG. 4. The matching device of FIG. 4 decomposes the packet from the matching device of FIG. 3, and compresses/restores the audio data. The matching device of FIG. 4 then performs an analog/digital conversion through the PCM codec 72, and makes a telephone call with the external line through the data access arrangement 74.

As described above, the communication system according to the present invention can be installed at a low cost and can provide communications with an inexpensive charge by enabling telephone calls through Internet as well as through internal and external telephone lines without installing a separate telephone network or data communication network.

While the present invention has been described and illustrated herein with reference to the preferred embodiments thereof, it will be understood by those skilled in the art that various changes in form and details may be made therein without departing from the spirit and scope of the invention.

## Claims

1. A communication system where a data communication network connected to a plurality of personal computers (PC) is combined with a telephone network connected to a plurality of telephone sets, the communication system comprising:
a data communication network matching device for separating audio data from packet data inputted through the data communication network by decomposing and analyzing the packet data; and
a telephone subscriber matching device for digital-converting and compressing an audio signal inputted from the telephone network, converting compressed audio data into packet data with reference to Internet protocol (IP) addresses corresponding to telephone numbers of the respective telephone sets, and transferring the data packet to the data communication network matching device, the telephone subscriber matching device also restoring and analog-converting the audio data inputted from the data communication network matching device, and transferring converted audio signal to the telephone network;
wherein the IP addresses corresponding to the telephone numbers are provided by dialing a specified button of the telephone set to discriminate an internal telephone call, external telephone call, and telephone call using Internet.

2. The communication system as claimed in claim 1, wherein the data communication network matching device and the telephone subscriber matching device are installed on a main board of the PC.

3. The communication system as claimed in claim 1, wherein the data communication network matching device and the telephone subscriber matching device are mounded on the PC in the form of a single card or of two independent cards.

4. The communication system as claimed in claim 1, wherein the telephone subscriber matching device comprises:
an audio codec for compressing/restoring the audio data;
a pulse code modulation (PCM) codec for converting the analog audio signal into a digital signal and vice versa; and
a subscriber line interface circuit (SLIC), connected to the respective telephone set, for performing a telephone subscriber matching function.

5. The communication system as claimed in claim 1, wherein the telephone subscriber matching device further comprises:
a pulse code modulation (PCM) codec; and
a data access arrangement (DAA);
wherein the telephone line connected to the data access arrangement is connected to all the PCS connected to the data communication network to share the telephone sets.

6. The communication system as claimed in claim 1, wherein the specified button of the telephone set which is used for dialing the IP address to discriminate the telephone call using the Internet is a button of # or *, and is inputted as a first tone of the IP address.

7. The communication system as claimed in claim 1, wherein the IP address is inputted by dialing the specified button of # or * in replacement of a button of ., that is a discriminator of the IP address.
